# FASCICULE DE BREVET EUROPEEN

(11) **EP 4 006 653 B1**
(45) Date de publication et mention de la délivrance du brevet: **26.02.2025**
(21) Numéro de dépôt: 20210652.2
(22) Date de dépôt: 30.11.2020
(51) Int. Cl.: G04G 21/04, G04R 20/26, G04R 60/08

(54) **BOITE DE MONTRE COMPRENANT UN DISPOSITIF DE CONTRÔLE D'UN DISPOSITIF DE COMMUNICATION EN CHAMP PROCHE**
ARMBANDUHRENGEHÄUSE, DAS EINE KONTROLLVORRICHTUNG EINER NAHFELDKOMMUNIKATIONSVORRICHTUNG UMFASST
WATCH CASE COMPRISING A CONTROL DEVICE FOR A NEAR FIELD COMMUNICATION DEVICE

(43) Date de publication de la demande: 01.06.2022
(73) Titulaire: The Swatch Group Research and Development Ltd, 2074 Marin (CH)
(72) Inventeur: RANDJELOVIC, Zoran, 2035 Corcelles (CH); ETIENNE, Jean-Daniel, 2206 Les Geneveys-sur-Coffrane (CH); SCORDILIS, Thierry, 2036 Cormondrèche (CH)
(74) Mandataire: ICB SA

(56) Documents cités:
- EP-A1- 3 671 371
- CH-A2- 713 298
- CH-B5- 686 696
- US-A1- 2019 020 380

## Description

### Domaine technique de l'invention

L'invention concerne une boîte de montre comprenant un dispositif de contrôle d'un dispositif de communication en champ proche, ainsi qu'une montre équipée d'une telle boîte.

### Arrière-plan technologique

Il est connu de réaliser des montres incorporant des dispositifs de communication en champ proche. Ces dispositifs sont composés d'une puce électronique, ou circuit intégré, reliée électriquement à une antenne. La plupart du temps, ces dispositifs n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

Cependant, ces dispositifs de communication intégrés dans ces montres présentent une grande vulnérabilité vis-à-vis de tiers malintentionnés qui pourraient, en approchant un émetteur récepteur, récupérer à l'insu de leur propriétaire, des informations confidentielles. De surcroit, de tels dispositifs de communication en champ proche restent vulnérables entre le moment où ils sont activés et celui où la communication s'établit avec le lecteur. De plus on notera que les différentes méthodes de sécurisation connues sont inadaptées à certaines montres, sont peu pratiques et ne permettent pas d'éliminer totalement les risques de piratage. CH 713 298 A2 divulgue une boite de montre comportant une lunette pivotante creuse formée de premier et deuxième éléments d'habillage comprenant un dispositif de communication en champ proche pourvu d'au moins un microcircuit relié à une antenne, ladite boite comportant un dispositif de contrôle configuré pour activer ou désactiver ledit dispositif de communication, ladite lunette étant formée d'un assemblage des deux éléments d'habillage susceptibles de définir un logement dans lequel est agencé ledit dispositif de communication en champ proche.

Ainsi, l'état de l'art n'offre pas de solution permettant de surmonter de tels inconvénients, il existe par conséquent un besoin de proposer une alternative aux solutions existantes.

### Résumé de l'invention

Un des buts de la présente invention est de proposer un moyen pour sécuriser un dispositif de communication en champ proche intégré dans une montre qui soit facile à utiliser et plus sûr que les solutions de l'art antérieur.

Un autre de ces buts est de fournir une montre qui peut être facilement et rapidement démontée pour assurer la maintenance du dispositif de communication en champ proche et/ou d'un dispositif de contrôle de ce dispositif de communication, agencés tous deux dans cette montre.

L'invention concerne une boite de montre selon la revendication 1.

Dans d'autres modes de réalisation :
- le dispositif de contrôle comprend un élément conducteur d'électricité de type boucle dont les deux extrémités libres comprennent chacune une borne de contact électrique ;
- le dispositif de contrôle comprend un élément commutateur permettant de fermer ou d'ouvrir électriquement ledit élément conducteur ;
- le dispositif de contrôle comprend un organe de commande mobile apte à être déplacé entre deux positions prédéfinies, à savoir une position active dans laquelle le dispositif de communication est activé et une position inactive dans laquelle le dispositif de communication est désactivé ;
- l'élément commutateur comprend deux portions terminales dont chacune est susceptible d'être en contact avec une des deux bornes de l'élément conducteur lorsque ce dernier est fermé électriquement par l'élément commutateur ;
- l'élément commutateur et l'élément conducteur sont agencés mobiles dans la boite de montre relativement l'un à l'autre de manière à ce que l'élément commutateur ouvre ou ferme électriquement ledit élément conducteur ;
- l'élément commutateur est agencé dans un organe de commande notamment dans la lunette, et l'élément conducteur dans la carrure ;
- l'élément commutateur est agencé dans la carrure et l'élément conducteur dans un organe de commande notamment dans la lunette ;
- le dispositif de fixation réversible comprend un élément de serrage notamment un joint comprimable ;
- le premier élément d'habillage comprend une zone de fixation réversible comprenant une rainure définie sur une paroi périphérique externe du premier élément d'habillage ;
- ladite rainure est configurée pour recevoir ledit élément de serrage ;
- ledit deuxième élément d'habillage comprend une zone de liaison réversible qui est susceptible de coopérer par frottement avec un élément de serrage agencé dans une rainure comprise dans le premier élément d'habillage ;
- la lunette comprend un élément de support amovible du dispositif de communication en champ proche ;
- l'élément de support comprend sur sa face supérieure une zone de réception notamment en plan inclinée susceptible de recevoir ladite antenne ;
- l'élément de support comprend un évidement dans lequel est susceptible d'être agencé en tout ou partie ledit au moins un microcircuit ;
- l'élément de support comprend sur sa face inférieure au moins deux pieds susceptibles de prendre appui sur une face interne du deuxième élément d'habillage de la lunette lorsque ce deuxième élément d'habillage est assemblé au premier élément d'habillage ;
- la zone de réception de l'élément de support comprend ou est formée d'un écran magnétique de protection comme la ferrite ;
- les premier et deuxième éléments d'habillage, l'élément de support amovible et l'élément de serrage sont réalisés en au moins un matériau diélectrique et/ou électriquement non conducteur ;
- ladite lunette est fixée sur la carrure à partir d'au moins un élément de fixation amovible notamment de type clippage ;
- le dispositif de communication en champ comprend un enrobage de matière étanche susceptible de rendre ledit dispositif imperméable à l'eau et/ou à l'humidité ;
- le dispositif de communication en champ proche est un dispositif de paiement électronique sans contact ;

Un autre aspect de l'invention concerne une montre comportant une boite comprenant un dispositif de communication en champ proche.

Avantageusement, la montre est étanche.

### Brève description des figures

Les buts, avantages et caractéristiques...
- la figure 1 est une représentation schématique d'une montre pourvue d'une boite comprenant une lunette dans laquelle est agencé un dispositif de communication en champ proche, et un dispositif de contrôle dudit dispositif de communication, selon un mode de réalisation de l'invention ;
- les figures 2 et 3 représentent des vues en coupe de la montre de la figure 1, respectivement dans des positions inactive et active, à savoir une position active dans laquelle le dispositif de communication est activé et une position inactive dans laquelle le dispositif de communication est désactivé, selon le mode de réalisation de l'invention ;
- la figure 4 est une vue de dessus d'une représentation en perspective de la lunette, selon le mode de réalisation de l'invention ;
- la figure 5 est une vue de dessous d'une représentation en perspective de la lunette, selon le mode de réalisation de l'invention, et
- la figure 6 est une vue éclatée d'une représentation en perspective de la lunette, selon le mode de réalisation de l'invention.

### Description détaillée de l'invention

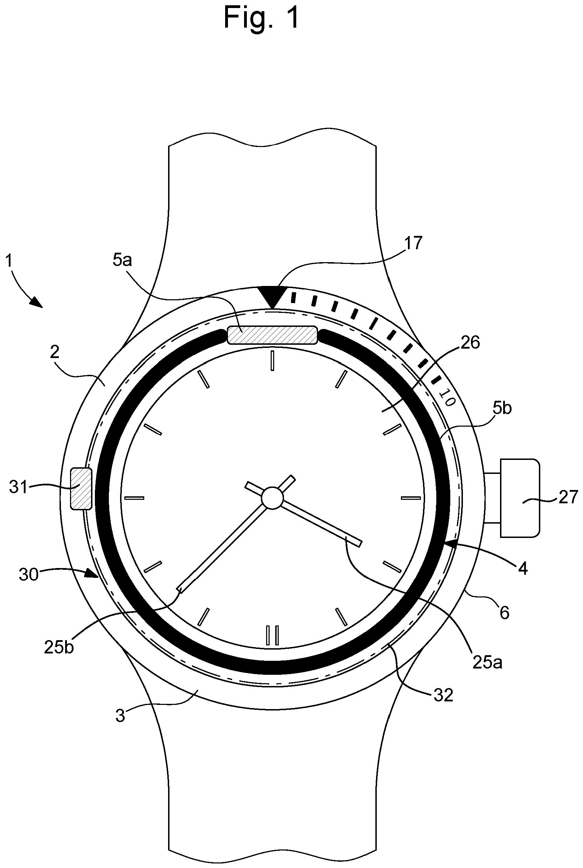

La figure 1 est une représentation schématique d'une montre 1 comprenant une boite 2 comportant une carrure 6 et une lunette 3 creuse pourvue d'un dispositif de communication 4 en champ proche de type NFC (acronyme de « Near Field Communication »). Un tel dispositif de communication 4 en champ proche peut participer à la réalisation d'un paiement électronique sans contact. Dans ce contexte, un tel dispositif 4 est alors un dispositif de paiement électronique sans contact.

Ce dispositif de communication 4 en champ proche comprend au moins un microcircuit 5a qui peut être un circuit intégré et une antenne 5b de préférence de forme circulaire pouvant être bobinée en matériau électriquement conducteur, par exemple en cuivre ou en aluminium ou encore réalisée sur un circuit imprimé (ou PCB de l'anglais Printed Circuit Board) et qui est reliée audit microcircuit 5a.

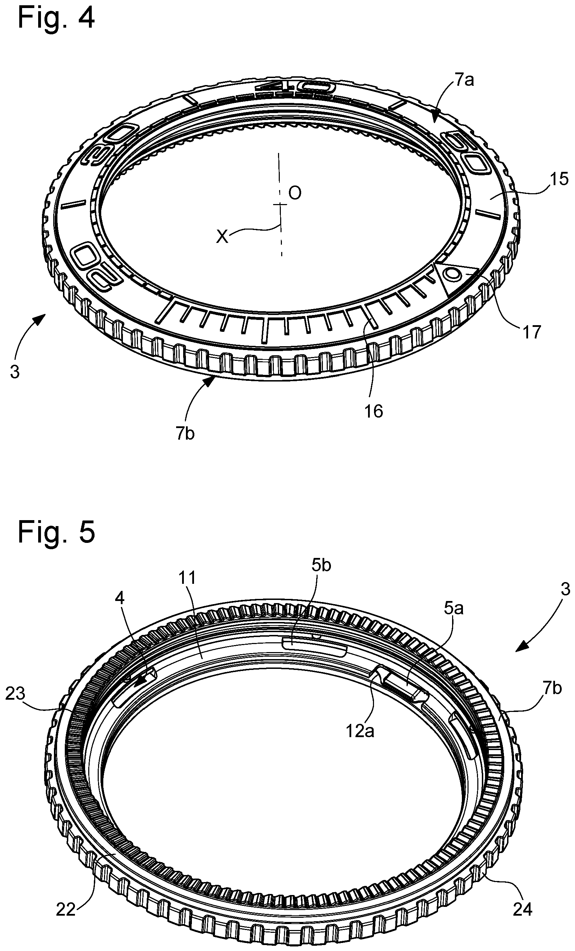

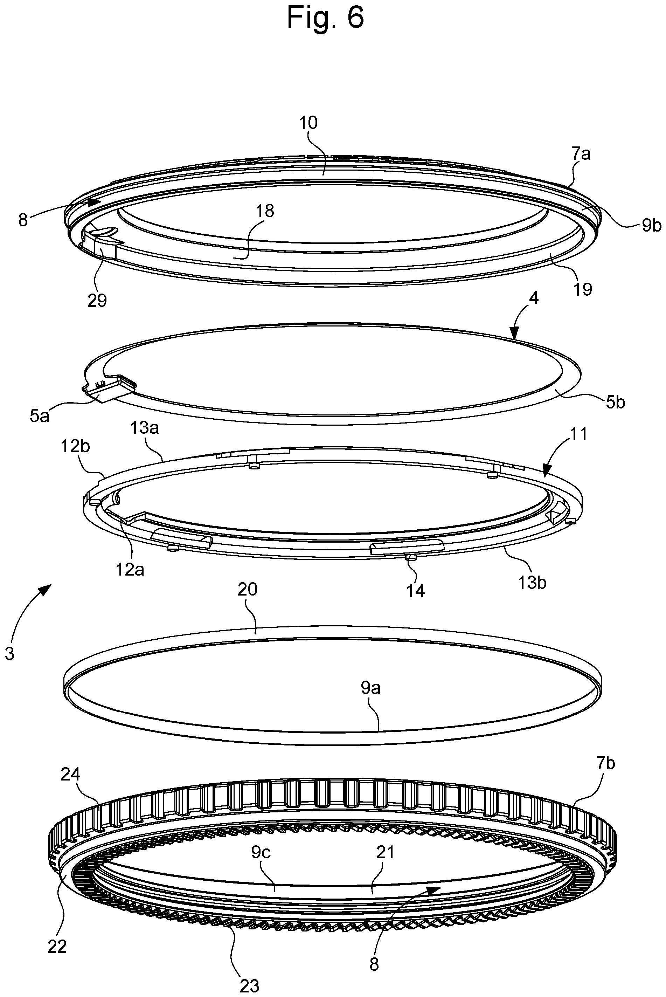

En référence aux figures 1 à 6, la montre 1 selon l'invention comprend une lunette 3 qui peut être facilement démontée/désassemblée notamment pour changer le dispositif de communication 4 en champ proche qui serait défectueux et ce, sans endommager cette lunette 3 et par extension la boite 2 de montre 1. De plus, cette lunette 3 participe aussi à permettre d'intégrer un tel dispositif 4 dans cette montre 1 de manière plus simple et plus économique. On notera qu'une telle lunette pivotante 3 peut être unidirectionnelle ou bidirectionnelle.

Dans l'optique d'améliorer la sécurité de cette montre 1, cette dernière comprend un dispositif de contrôle 30 à distance du dispositif de communication 4 qui participe à éviter qu'un tiers malintentionné récupère à l'insu de l'utilisateur de la montre 1, des informations sensibles qui y sont archivées en utilisant à cet escient par exemple un émetteur récepteur idoine. Dans cette configuration, on comprend que le dispositif de communication 4 est par défaut désactivé et que son activation ne peut être réalisée qu'à partir de ce dispositif de contrôle 30. Un tel dispositif de contrôle 30 qui est décrit plus en détail par la suite est configuré pour activer ou désactiver ce dispositif de communication. On notera que ce dispositif de contrôle 30 est dit distant ou à distance car il est distinct du dispositif de communication 4. Autrement dit, ce dispositif de contrôle 30 n'est pas connecté par une liaison physique au dispositif de communication 4.

Cette montre 1 peut être une montre électronique ou une montre mécanique ou encore une montre connectée. Cette montre 1 peut être étanche et dans cette configuration elle peut être une montre sportive telle qu'une montre de plongée.

Dans cette montre 1, la boite 2 comprend en premier lieu, une carrure 6. La carrure 6 peut être réalisée en métal (par ex. en acier, de préférence inoxydable), dans un matériau synthétique (par ex. dans un matériau composite comprenant une matrice polymère chargée de fibres, typiquement de carbone) ou en céramique ou encore dans un matériau diélectrique et/ou électriquement non conducteur. Comme on le voit sur la figure 1, la carrure 6 est à contour circulaire. La carrure 6 définit un espace intérieur configuré pour accueillir un mouvement d'horlogerie. Cette carrure 6 comprend des cornes sur lesquelles est destiné à venir s'accrocher un bracelet pour le port de la montre 1 au poignet. Si l'on fait abstraction des cornes, la carrure 6 présente une symétrie générale de révolution autour d'un axe central X.

Cette boite 2 de montre 1 comprend en deuxième lieu, la lunette 3 qui est montée de manière amovible sur la carrure 6. Cette lunette 3 est en effet montée sur cette carrure 6 à partir d'au moins un élément de fixation amovible notamment de type clippage ou encore emboitage. Un tel élément de fixation permet d'assembler et désassembler la lunette 3 de la carrure 6 facilement, rapidement et simplement sans les endommager afin d'assurer par exemple la maintenance du dispositif de communication 4 en champ proche.

Sur les figures 1 à 4, cette lunette 3 présente une forme essentiellement annulaire. Elle comprend deux éléments d'habillage 7a, 7b, un dispositif de fixation réversible 8 et un élément de support amovible 11 du dispositif de communication 4 en champ proche. Plus précisément, cette lunette 3 est formée par l'assemblage du premier élément d'habillage 7a avec le deuxième élément d'habillage 7b de manière à définir un logement dans lequel est agencé le dispositif de communication 4 en champ proche. En particulier, on notera que dans cette configuration l'élément de support 11 est pris en sandwich entre ces deux éléments d'habillage 7a, 7b. Dans cette lunette 3, le dispositif de fixation réversible 8 comprend une zone de fixation 9b et une zone de liaison 9c ainsi qu'un élément de serrage 9a que nous décrirons par la suite. Rappelons qu'un tel dispositif 8 participe à l'assemblage des premier et deuxième éléments d'habillage 7a, 7b par un emboîtage par serrage.

Le premier élément d'habillage 7a comprend une face externe 15 sur laquelle est apposée ou formée une graduation 16. Dans l'exemple illustré, la graduation comprend des index dont certains sont figuratifs et se présentent sous forme de chiffres (de préférence arabes). L'un des index, dit index de zéro 17, se présente sous forme d'un triangle pointant vers l'intérieur de cette premier élément d'habillage 7a, pour former un repère d'origine à partir duquel l'utilisateur mesure, en minutes, le temps écoulé à partir d'un instant initial prédéterminé correspondant à une position angulaire précise de la lunette 3 par rapport à la carrure 6. Ce premier élément d'habillage 7a comprend aussi un face interne 18, une paroi périphérique interne 19 et une paroi périphérique externe.

Ce premier élément d'habillage 7a comprend une zone d'agencement 29 dudit au moins un microcircuit 5a du dispositif de communication 4 qui est ménagée à la fois dans une partie de la paroi périphérique interne 19 et une partie de la face interne 18. Cette zone d'agencement 29 est de préférence localisée derrière l'index de zéro 17.

Le premier élément d'habillage 7a comprend également la zone de fixation 9b réversible comprenant une rainure 10 définie sur sa paroi périphérique externe. Une telle rainure 10 est spécifiquement configurée pour recevoir l'élément de serrage 9a.

Cet élément de serrage 9a peut être un joint comprimable qui est de plus petite taille que le pourtour (circonférence) de la rainure 10. Un tel élément de serrage 9a est donc agencé dans la rainure 10 en étant étiré. Malgré sa plus petite circonférence, l'élément de serrage 9a trouve sa place dans cette rainure 10 grâce à ses propriétés élastiques, qui lui permettent d'être détendue et qui une fois placée dans la rainure 10 se rétrécira pour se plaquer contre la paroi périphérique externe dans la rainure 10.

Cette zone de fixation 9b réversible est apte à coopérer avec la zone de liaison 9c réversible définie sur une paroi périphérique interne 21 du deuxième élément d'habillage 7b de la lunette 3. Cette zone de liaison 9c est apte à coopérer avec une surface externe 20 de l'élément de serrage 9a monté dans la rainure 10 de la zone de fixation 9b afin de relier de manière réversible le premier élément d'habillage 7a avec le deuxième élément d'habillage 7b. On notera que la zone de liaison 9c est susceptible de coopérer par frottement avec la surface externe 20 de l'élément de serrage 9a agencé dans la rainure 10.

Dans cette configuration, le diamètre reliant deux points de la surface externe 20 de l'élément de serrage 9a monté sur le premier élément d'habillage 7a est sensiblement supérieur ou strictement supérieur au diamètre reliant deux points de la zone de liaison 9c du deuxième élément d'habillage 7b. On notera que le diamètre reliant deux point de la rainure 10 du premier élément d'habillage 7a est sensiblement inférieur ou strictement inférieur au diamètre reliant deux points de la zone de liaison 9c du deuxième élément d'habillage 7b. En outre, on comprend que le diamètre du premier élément d'habillage 7a dépourvu de l'élément de serrage 9a, est sensiblement inférieur ou strictement inférieur à celui du deuxième élément d'habillage 7b.

Le deuxième élément d'habillage 7b comprend une face interne qui est contiguë à sa paroi périphérique interne 21. Cette face interne est notamment configurée pour être une face d'appui de l'élément de support 11 de la lunette 3 lorsque les premier et deuxième éléments d'habillage 7a, 7b sont assemblés. Ce deuxième élément d'habillage 7b comporte une face externe 22 opposée à la face interne et qui s'étend en regard d'une face supérieure 28 de la carrure 6, et plus précisément en regard d'une partie de la carrure 6 prévue pour la fixation amovible de la lunette 3. Cette face externe 22 comprend une couronne dentée 23 de cette lunette 3 qui sert à l'indexage angulaire de la lunette 3 par rapport à la carrure 6. Cette couronne dentée 23 comprend une série périphérique de dents dont chaque dent est asymétrique et comprend une rampe inclinée et une surface d'arrêt verticale, éventuellement reliées par un plateau horizontal.

Ce deuxième élément d'habillage 7b est aussi pourvu d'une paroi périphérique externe sur laquelle est définie une zone de préhension 24 de la lunette 3.

Ainsi que nous l'avons évoqué, la lunette 3 comprend l'élément de support 11 amovible du dispositif de communication 4 en champ proche. Plus précisément, cet élément de support 11 est pourvu d'une face supérieure 13a comportant une zone de réception 12b de l'antenne 5b dudit dispositif de communication 4. Cette zone de réception 12b sur laquelle est agencée ladite antenne 5b est notamment compris dans un plan incliné. Cet élément de support 11 comprend aussi un évidement 12a, ou une ouverture traversante, dans lequel est susceptible d'être agencé en tout ou partie ledit au moins un microcircuit 5a.

Dans une variante, la zone de réception 12b peut comprendre/former un écran magnétique de protection comme la ferrite en étant couverte d'une couche de matériau à base de la ferrite. Dans ce contexte, la partie de la paroi périphérique interne et la face interne du deuxième élément d'habillage 7b localisées à proximité dudit au moins un microcircuit 5a, peuvent également comprendre une telle couche de matériau afin de former un écran magnétique avec cet élément de support 11.

En outre cet élément de support 11 comprend une face inférieure 13b comprenant une pluralité de pieds 14 susceptibles de prendre appui sur la face interne du deuxième élément d'habillage 7b de cette lunette 3 lorsque ce deuxième élément d'habillage 7b est assemblé au premier élément d'habillage 7a.

Dans cette lunette 3, les premier et deuxième éléments d'habillage 7a, 7b, l'élément de serrage 9a et l'élément de support 11 sont adaptés au fonctionnement du dispositif de communication 4 en champ proche en étant fabriqués en des matériaux diélectriques et électriquement non conducteurs, comme par exemple un polymère, du titane ou une céramique, ou tout autre matériau de synthèse.

Par ailleurs, le dispositif de communication 4 comprend un enrobage de matière étanche qui le rend imperméable à l'eau et à l'humidité. Cet enrobage de matière est aussi apte à le rendre résistant à des pressions élevées pouvant être rencontrées lors de plongées effectuées par le porteur de la montre 1. Cet enrobage de matière peut comprendre des couches organiques ou inorganiques ou une combinaison de ces deux types de couches.

En référence aux figures 1 à 6, dans cette boite 2 de montre 1, le dispositif de contrôle 30 à distance du dispositif de communication 4 comprend un élément conducteur d'électricité 33, un élément commutateur 34 et un organe de commande mobile 3, 27. Cet élément conducteur d'électricité 33 est de type boucle en particulier une boucle qui est ouverte et dont les deux extrémités libres forment chacune une borne 35a, 35b de contact électrique. Cet élément conducteur 33 a une forme essentiellement annulaire. L'élément commutateur 34 est quant à lui une pièce métallique 37 montée sur un support de fixation 38. Un tel élément commutateur 34 permet de fermer ou d'ouvrir électriquement l'élément conducteur 33. Cet élément commutateur 34 est pourvu de deux portions terminales 36a, 36b dont chacune est susceptible d'être en contact avec une des deux bornes 35a, 35b de l'élément conducteur 33 lorsque ce dernier est fermé électriquement par l'élément commutateur 34.

Dans la boite 2 de montre 1, l'élément commutateur 34 et l'élément conducteur 33 sont agencés mobiles relativement l'un à l'autre de façon à ce que l'élément commutateur 34 ouvre ou ferme électriquement ledit élément conducteur 33 c'est-à-dire de manière à ce que :
- chaque borne 35a, 35b soit en contact avec chaque portion terminale 36a, 36b pour fermer électriquement ledit élément conducteur 33, ou
- chaque borne 35a, 35b ne soit pas en contact avec chaque portion terminale 36a, 36b pour ouvrir électriquement ledit élément conducteur 33.

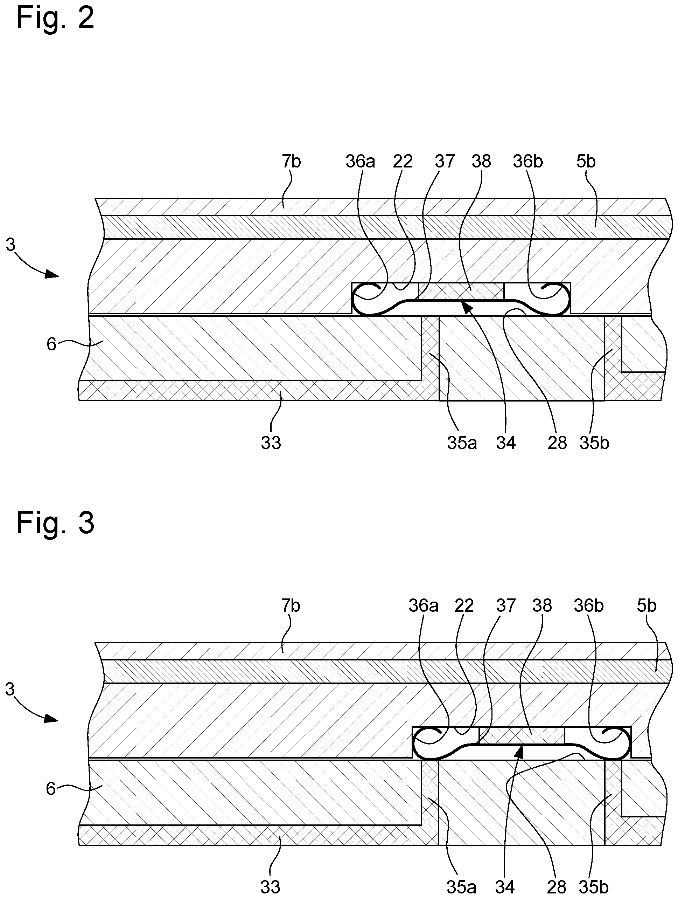

Plus précisément et ainsi que l'illustrent les figures 2 et 3, l'élément commutateur 34 peut être agencé dans l'organe de commande mobile 3, 27 qui peut être déplacé en rotation ou en translation comme par exemple la lunette pivotante 3 ou encore une couronne 27 de la boite 2 de montre 1, et l'élément conducteur 33 dans la carrure 6. Dans cette configuration, l'élément commutateur 34 est situé dans une portion de la face externe 22 du deuxième élément d'habillage 7b de la lunette 3. L'élément conducteur 33 est quant à lui agencé ans une portion de cette carrure 6 qui est fabriquée en au moins un matériau diélectrique et/ou électriquement non conducteur. On notera que la face supérieure 28 de la carrure 6 peut être aussi réalisée en au moins un matériau diélectrique et/ou électriquement non conducteur car les portions terminales 36a, 36b de l'élément commutateur 34 sont en appui contre cette face supérieure 28 lorsque l'élément conducteur 33 est ouvert et que le dispositif de communication 4 en champ proche est désactivé.

Dans une variante, l'élément conducteur 33 peut être agencé dans l'organe de commande mobile 3, 27 et l'élément commutateur 34 dans la carrure 6. Dans cette configuration, l'élément conducteur 33 est agencé dans une portion de la face externe 22 du deuxième élément d'habillage 7b de la lunette 3. L'élément commutateur 34 est quant à lui agencé dans une portion de la carrure 6 qui est fabriquée en au moins un matériau diélectrique et/ou électriquement non conducteur

En référence à la figure 2, lorsque l'organe de commande 3, 27, ici la lunette pivotante 3, est dans une première position prédéfinie, dite position active, les portions terminales 36a, 36b de l'élément conducteur 33 sont en appui contre le matériau non conducteur de la face supérieure 28 de la carrure 6 si bien que l'élément conducteur 33 est électriquement ouvert et que le dispositif de communication 4 en champ proche est activé.

Lorsque l'organe de commande 3, 27 est dans une deuxième position prédéfinie, dite position inactive, représentée à la figure 3, ces portions terminales 36a, 36b sont en appui contre le matériau conducteur des bornes 35a, 35b de l'élément conducteur 33 si bien que cet élément 33 est électriquement fermé et que le dispositif en communication 4 est alors désactivé. Plus précisément dans cette configuration, lorsque le dispositif de communication 4 est mis en présence d'un lecteur du type terminal de paiement et que la puce 5a de ce dispositif 4 initie l'émission d'un signal via l'antenne 5b, le champ magnétique correspondant à ce signal et émis par cette antenne 5b comporte des lignes de champ qui se heurtent à l'élément conducteur 33 et génèrent dans celui-ci des courants induits, généralement appelés courants de Foucault. Ainsi, l'élément conducteur 33 absorbe ce champ magnétique du dispositif 4 qui ne parvient pas dès lors à communiquer avec le lecteur et est donc de fait dans une configuration désactivée. Autrement dit, l'élément conducteur 33 neutralise/inhibe la capacité d'émission d'un signal du dispositif de communication 4 vers le lecteur.

Ainsi en faisant pivoter la lunette, il est possible d'activer et de désactiver à volonté le dispositif de communication 4 en champ proche ce qui permet, en désactivant le dispositif 4, de se prémunir contre les risques de communication frauduleuse. L'ensemble composé par la lunette 3 et les portions terminales 36a, 36b d'un côté et par les bornes 35a, 35b et le boitier de l'autre, constitue un interrupteur mécanique.

En complément, la boite 2 de montre 1 peut comprendre une dispositif visuel et/ou sonore indiquant l'état activé ou désactivé du dispositif de communication 4. Dans ce contexte, une interface sonore de ce dispositif 4 peut comprendre un haut-parleur, un buzzer et/ou un vibreur. S'agissant d'une interface visuelle de ce dispositif 4, elle peut comprendre :
- un écran agencé dans le cadran 26 de cette montre 1 et/ou
- au moins une aiguille 25a, 25b susceptible de se déplacer et coopérant avec des index/appliques compris sur un cadran 26, et/ou
- au moins une aiguille 25a, 25b susceptible de se déplacer et coopérant avec des index ou des numéros compris sur un réhaut de la montre et/ou
- au moins une aiguille 25a, 25b susceptible de se déplacer et coopérant avec les index et/ou des numéros compris sur la lunette pivotante 3 de la montre 1, et/ou
- au moins un guichet aménagé dans le cadran 26 dans lequel une représentation graphique telle qu'un dessin ou encore un numéro peut être affichée, et/ou
- au moins une diode électroluminescente.

## Revendications

1. Boite (2) de montre (1) comportant une lunette pivotante (3) creuse formée de premier et deuxième éléments d'habillage (7a, 7b) comprenant un dispositif de communication (4) en champ proche pourvu d'au moins un microcircuit (5a) relié à une antenne (5b), ladite boite (2) comportant un dispositif de contrôle (30) configuré pour activer ou désactiver ledit dispositif de communication (4), ladite lunette étant formée d'un assemblage des deux éléments d'habillage (7a, 7b) susceptibles de définir un logement dans lequel est agencé ledit dispositif de communication (4) en champ proche, **caractérisé en ce que** le dispositif de contrôle (30) est à distance dudit dispositif de communication (4), le dispositif de contrôle (30) n'étant pas connecté par une liaison physique au dispositif de communication (4) et **en ce que** lesdits premier et deuxième éléments d'habillage (7a, 7b) de la lunette (3) sont assemblés l'un avec l'autre à partir d'un dispositif de fixation réversible (8).

2. Boite (2) selon la revendication précédente, **caractérisée en ce que** le dispositif de contrôle (30) comprend :
- un élément conducteur (33) d'électricité de type boucle dont les deux extrémités libres comprennent chacune une borne de contact électrique (35a, 35b) ;
- un élément commutateur (34) permettant de fermer ou d'ouvrir électriquement ledit élément conducteur (33), et
- un organe de commande mobile (3, 27) apte à être déplacé entre deux positions prédéfinies, à savoir une position active dans laquelle le dispositif de communication (4) est activé et une position inactive dans laquelle le dispositif de communication (4) est désactivé.

3. Boite (2) selon la revendication précédente, **caractérisée en ce que** l'élément commutateur (34) comprend deux portions terminales (36a, 36b) dont chacune est susceptible d'être en contact avec une des deux bornes (35a, 35b) de l'élément conducteur (33) lorsque ce dernier est fermé électriquement par l'élément commutateur (34).

4. Boite (2) selon l'une quelconque des revendications 2 et 3, **caractérisée en ce que** l'élément commutateur (34) et l'élément conducteur (33) sont agencés mobiles dans la boite (2) de montre (1) relativement l'un à l'autre de manière à ce que l'élément commutateur (34) ouvre ou ferme électriquement ledit élément conducteur (33).

5. Boite (2) selon l'une quelconque des revendications 2 à 4, **caractérisée en ce que** l'élément commutateur (34) est agencé dans un organe de commande (3, 27) notamment dans la lunette (3), et l'élément conducteur (33) dans la carrure (6).

6. Boite (2) selon l'une quelconque des revendications 2 à 4, **caractérisée en ce que** l'élément commutateur (34) est agencé dans la carrure (6) et l'élément conducteur (33) dans un organe de commande (3, 27) notamment dans la lunette (3).

7. Boite (2) selon l'une quelconque des revendications précédentes, **caractérisée en ce que** le dispositif de fixation réversible (8) comprend un élément de serrage (9a) notamment un joint comprimable.

8. Boite (2) selon l'une quelconque des revendications précédentes, **caractérisée en ce que** le premier élément d'habillage (7a) comprend une zone de fixation (9b) réversible comprenant une rainure (10) définie sur une paroi périphérique externe du premier élément d'habillage (7a).

9. Boite (2) selon la revendication précédente, **caractérisée en ce que** ladite rainure (10) est configurée pour recevoir ledit élément de serrage (9a).

10. Boite (2) selon l'une quelconque des revendications précédentes, **caractérisée en ce que** ledit deuxième élément d'habillage (7b) comprend une zone de liaison réversible (9c) qui est susceptible de coopérer par frottement avec un élément de serrage (9a) agencé dans une rainure (10) comprise dans le premier élément d'habillage (7a).

11. Boite (2) selon l'une quelconque des revendications précédentes, **caractérisée en ce que** la lunette (3) comprend un élément de support amovible (11) du dispositif de communication en champ proche (4).

12. Boite (2) selon la revendication précédente, **caractérisée en ce que** l'élément de support (11) comprend sur sa face supérieure (13a) une zone de réception (12b) notamment en plan inclinée susceptible de recevoir ladite antenne (5b).

13. Boite (2) selon la revendication 11,
**caractérisée en ce que** l'élément de support (11) comprend un évidement (12a) dans lequel est susceptible d'être agencé en tout ou partie ledit au moins un microcircuit (5a).

14. Boite (2) selon l'une quelconque des revendications 11 ou 12,
**caractérisée en ce que** l'élément de support (11) comprend sur sa face inférieure (13b) au moins deux pieds (14) susceptibles de prendre appui sur une face interne (15) du deuxième élément d'habillage (7b) de la lunette (3) lorsque ce deuxième élément d'habillage (7b) est assemblé au premier élément d'habillage (7a).

15. Boite (2) selon l'une quelconque des revendications 12 ou 14,
**caractérisée en ce que** la zone de réception de l'élément de support (11) comprend ou est formée d'un écran magnétique de protection comme la ferrite.

16. Boite (2) selon l'une quelconque des revendications précédentes, **caractérisée en ce que** les premier et deuxième éléments d'habillage (7a, 7b), l'élément de support amovible (11) et l'élément de serrage (9a) sont réalisés en au moins un matériau diélectrique et/ou électriquement non conducteur.

17. Boite (2) selon l'une quelconque des revendications précédentes, **caractérisée en ce que** ladite lunette (3) est fixée sur la carrure (6) à partir d'au moins un élément de fixation amovible notamment de type clippage.

18. Boite (2) selon l'une quelconque des revendications précédentes, **caractérisée en ce que**, le dispositif de communication (4) en champ comprend un enrobage de matière étanche susceptible de rendre ledit dispositif (4) imperméable à l'eau et/ou à l'humidité.

19. Boite (2) selon l'une quelconque des revendications précédentes, **caractérisée en ce que** le dispositif de communication (4) en champ proche est un dispositif de paiement électronique sans contact.

20. Montre (1) comportant une boite (2) comprenant un dispositif de communication (4) en champ proche, selon les revendications 1 à 19.

21. Montre (1) selon la revendication précédente, **caractérisée en ce qu'**elle est étanche.

## Patentansprüche

1. Gehäuse (2) einer Uhr (1), das eine hohle, drehbare Lünette (3) umfasst, die aus einem ersten und einem zweiten Ausstattungselementen (7a, 7b) gebildet wird, und eine Nahfeldkommunikationsvorrichtung (4) enthält, die mit mindestens einem Mikroschaltkreis (5a) versehen ist, der mit einer Antenne (5b) verbunden ist, wobei das Gehäuse (2) eine Steuervorrichtung (30) umfasst, die dazu konfiguriert ist, die Kommunikationsvorrichtung (4) zu aktiveren oder deaktivieren, wobei die Lünette aus einer Anordnung der beiden Ausstattungselemente (7a, 7b) gebildet wird, die dazu geeignet sind, einen Sitz zu definieren, in dem die Nahfeldkommunikationsvorrichtung (4) angeordnet ist, **dadurch gekennzeichnet, dass** die Steuervorrichtung (30) von der Kommunikationsvorrichtung (4) entfernt befindet, wobei die Steuervorrichtung (30) nicht über eine physische Verbindung mit der Kommunikationsvorrichtung (4) verbunden ist, und dass das erste und das zweite Ausstattungselement (7a, 7b) der Lünette (3) mittels einer reversiblen Befestigungsvorrichtung (8) zusammengebaut sind.

2. Gehäuse (2) nach dem vorhergehenden Anspruch, **dadurch gekennzeichnet, dass** die Steuervorrichtung (30) Folgendes enthält:
- ein elektrisch leitendes Element (33) vom Schleifentyp, dessen beide freien Enden jeweils einen elektrischen Kontaktanschluss (35a, 35b) enthalten;
- ein Schaltelement (34), das es ermöglicht, das leitende Element (33) elektrisch zu schließen oder zu öffnen, und
- ein bewegliches Steuerorgan (3, 27), das dazu ausgelegt ist, zwischen zwei vordefinierten Positionen bewegt zu werden, nämlich einer aktiven Position, in der die Kommunikationsvorrichtung (4) aktiviert ist, und einer inaktiven Position, in der die Kommunikationsvorrichtung (4) deaktiviert ist.

3. Gehäuse (2) nach dem vorhergehenden Anspruch, **dadurch gekennzeichnet, dass** das Schaltelement (34) zwei Endabschnitte (36a, 36b) enthält, von denen jeder dazu geeignet ist, mit einem der beiden Anschlüsse (35a, 35b) des leitenden Elements (33) in Kontakt zu kommen, wenn letzteres durch das Schaltelement (34) elektrisch geschlossen wird.

4. Gehäuse (2) nach einem der Ansprüche 2 und 3, **dadurch gekennzeichnet, dass** das Schaltelement (34) und das leitende Element (33) im Verhältnis zueinander beweglich im Gehäuse (2) der Uhr (1) angeordnet sind, so dass das Schaltelement (34) das leitende Element (33) elektrisch öffnet oder schließt.

5. Gehäuse (2) nach einem der Ansprüche 2 bis 4, **dadurch gekennzeichnet, dass** das Schaltelement (34) in einem Steuerorgan (3, 27), insbesondere in der Lünette (3), und das leitende Element (33) im Mittelteil (6) angeordnet ist.

6. Gehäuse (2) nach einem der Ansprüche 2 bis 4, **dadurch gekennzeichnet, dass** das Schaltelement (34) im Mittelteil (6) und das leitende Element (33) in einem Steuerorgan (3, 27), insbesondere in der Lünette (3), angeordnet ist.

7. Gehäuse (2) nach einem der vorhergehenden Ansprüche, **dadurch gekennzeichnet, dass** die reversible Befestigungsvorrichtung (8) ein Klemmelement (9a), insbesondere eine komprimierbare Dichtung, enthält.

8. Gehäuse (2) nach einem der vorhergehenden Ansprüche, **dadurch gekennzeichnet, dass** das erste Ausstattungselement (7a) einen reversiblen Befestigungsbereich (9b) enthält, der eine Nut (10) enthält, die auf einer äußeren Umfangswandung des ersten Ausstattungselements (7a) definiert ist.

9. Gehäuse (2) nach dem vorhergehenden Anspruch, **dadurch gekennzeichnet, dass** die Nut (10) dazu konfiguriert ist, das Klemmelement (9a) aufzunehmen.

10. Gehäuse (2) nach einem der vorhergehenden Ansprüche, **dadurch gekennzeichnet, dass** das zweite Ausstattungselement (7b) einen reversiblen Verbindungsbereich (9c) enthält, der dazu geeignet ist, durch Reibung mit einem Klemmelement (9a) zusammenzuwirken, das in einer im ersten Ausstattungselement (7a) liegenden Nut (10) angeordnet ist.

11. Gehäuse (2) nach einem der vorhergehenden Ansprüche, **dadurch gekennzeichnet, dass** die Lünette (3) ein abnehmbares Trägerelement (11) der Nahfeldkommunikationsvorrichtung (4) enthält.

12. Gehäuse (2) nach dem vorhergehenden Anspruch, **dadurch gekennzeichnet, dass** das Trägerelement (11) auf seiner oberen Fläche (13a) einen Aufnahmebereich (12b), insbesondere eine geneigte Ebene, enthält, der dazu geeignet ist, die Antenne (5b) aufzunehmen.

13. Gehäuse (2) nach Anspruch 11, **dadurch gekennzeichnet, dass** das Trägerelement (11) eine Aussparung (12a) enthält, in der der mindestens eine Mikroschaltkreis (5a) ganz oder teilweise angeordnet werden kann.

14. Gehäuse (2) nach einem der Ansprüche 11 oder 12, **dadurch gekennzeichnet, dass** das Trägerelement (11) auf seiner unteren Fläche (13b) mindestens zwei Füße (14) enthält, die dazu geeignet sind, auf einer Innenfläche (15) des zweiten Ausstattungselements (7b) der Lünette (3) aufzuliegen, wenn das zweite Ausstattungselement (7b) mit dem ersten Ausstattungselement (7a) zusammengebaut wird.

15. Gehäuse (2) nach einem der Ansprüche 12 oder 14, **dadurch gekennzeichnet, dass** der Aufnahmebereich des Trägerelements (11) eine magnetische Schutzabschirmung wie Ferrit enthält oder daraus ausgebildet ist.

16. Gehäuse (2) nach einem der vorhergehenden Ansprüche, **dadurch gekennzeichnet, dass** das erste und das zweite Ausstattungselement (7a, 7b), das abnehmbare Trägerelement (11) und das Klemmelement (9a) aus mindestens einem dielektrischen und/oder elektrisch nicht leitenden Material hergestellt sind.

17. Gehäuse (2) nach einem der vorhergehenden Ansprüche, **dadurch gekennzeichnet, dass** die Lünette (3) mittels mindestens eines abnehmbaren Befestigungselements, insbesondere vom Klemmtyp, am Mittelteil (6) befestigt ist.

18. Gehäuse (2) nach einem der vorhergehenden Ansprüche, **dadurch gekennzeichnet, dass** die Feldkommunikationsvorrichtung (4) einen Verguss aus wasserbeständigem Material enthält, die die Vorrichtung (4) wasser- und/oder feuchtigkeitsbeständig machen kann.

19. Gehäuse (2) nach einem der vorhergehenden Ansprüche, **dadurch gekennzeichnet, dass** die Nahfeldkommunikationsvorrichtung (4) eine kontaktlose elektronische Zahlungsvorrichtung ist.

20. Uhr (1), die ein Gehäuse (2), das eine Nahfeldkommunikationsvorrichtung (4) enthält, nach den Ansprüchen 1 bis 19 umfasst.

21. Uhr (1) nach dem vorhergehenden Anspruch, **dadurch gekennzeichnet, dass** sie wasserdicht ist.

## Claims

1. Watch (1) case (2) including a hollow pivoting bezel (3) formed of first and second external elements (7a, 7b) comprising a near-field communication device (4) provided with at least one microcircuit (5a) connected to an antenna (5b), said case (2) including a control device (30) configured to activate or deactivate said communication device (4), said bezel being formed by an assembly of two external elements (7a, 7b) capable of defining a housing in which said near-field communication device (4) is arranged, **characterized in that** the control device (30) is remote from the communication device (4), the control device (30) not being connected by a physical connection to the communication device (4) and **in that** said first and second external elements (7a, 7b) of the bezel (3) are assembled together using a reversible fastening device (8).

2. Case (2) according to the preceding claim, **characterized in that** the control device (30) comprises:
- an electrically conductive element (33) of the loop type, the two free ends of which each comprise an electrical contact terminal (35a, 35b);
- a switch element (34) capable of electrically closing or opening said conductive element (33), and
- a movable control member (3, 27) capable of being moved between two predefined positions, namely an active position in which the communication device (4) is activated and an inactive position in which the communication device (4) is deactivated.

3. Case (2) according to the preceding claim, **characterized in that** the switch element (34) comprises two end portions (36a, 36b) each of which is capable of being in contact with one of the two terminals (35a, 35b) of the conductive element (33) when the latter is electrically closed by the switch element (34).

4. Case (2) according to any one of claims 2 and 3, **characterized in that** the switch element (34) and the conductive element (33) are movably arranged in the watch (1) case (2) relative to each other so that the switch element (34) opens or closes said conductive element electrically (33).

5. Case (2) according to any one of claims 2 to 4, **characterized in that** the switch element (34) is arranged in a control member (3, 27), in particular in the bezel (3), and the conductive element (33) in the middle (6).

6. Case (2) according to any one of claims 2 to 4, **characterized in that** the switch element (34) is arranged in the middle (6) and the conductive element (33) in a control member (3, 27), in particular in the bezel (3).

7. Case (2) according to any one of the preceding claims, **characterized in that** the reversible fastening device (8) comprises a clamping element (9a) in particular a compressible seal.

8. Case (2) according to any one of the preceding claims, **characterized in that** the first external element (7a) comprises a reversible fastening area (9b) comprising a groove (10) defined on an outer peripheral wall of the first external element (7a).

9. Case (2) according to the preceding claim, **characterized in that** said groove (10) is configured to receive said clamping element (9a).

10. Case (2) according to any one of the preceding claims, **characterized in that** said second external element (7b) comprises a reversible connection area (9c) which is capable of cooperating by friction with a clamping element (9a) arranged in a groove (10) formed in the first external element (7a).

11. Case (2) according to any one of the preceding claims, **characterized in that** the bezel (3) comprises a removable support element (11) for the near-field communication device (4).

12. Case (2) according to the preceding claim, **characterized in that** the support element (11) comprises on its upper face (13a) a receiving area (12b), in particular in an inclined plane capable of receiving said antenna (5b).

13. Case (2) according to claim 11, **characterized in that** the support element (11) comprises a recess (12a) in which said at least one microcircuit (5a) is capable of being arranged entirely or partially.

14. Case (2) according to any one of claims 11 or 12, **characterized in that** the support element (11) comprises on its lower face (13b) at least two feet (14) capable of bearing on an inner face (15) of the second external element (7b) of the bezel (3) when this second external element (7b) is assembled to the first external element (7a).

15. Case (2) according to any one of claims 12 or 14, **characterized in that** the area for receiving the support element (11) comprises or is formed of a protective magnetic screen such as ferrite.

16. Case (2) according to any one of the preceding claims, **characterized in that** the first and second external elements (7a, 7b), the removable support element (11) and the clamping element (9a) are made of at least one dielectric and/or electrically non-conductive material.

17. Case (2) according to any one of the preceding claims, **characterized in that** said bezel (3) is fastened to the middle (6) using at least one removable fastening element, in particular of the clipping type.

18. Case (2) according to any one of the preceding claims, **characterized in that** the field communication device (4) comprises a coating made of water-resistant material capable of making said device (4) water and/or humidity resistant.

19. Case (2) according to any one of the preceding claims, **characterized in that** the near-field communication device (4) is a contactless electronic payment device.

20. Watch (1) including a case (2) comprising a near-field communication device (4), according to claims 1 to 19.

21. Watch (1) according to the preceding claim, **characterized in that** it is water-resistant.
